Europäisches Patentamt

(19) European Patent Office

Office européen des brevets

(11) Publication number: **0 101 705**
**B1**

# (12) EUROPEAN PATENT SPECIFICATION

(45) Date of publication of the patent specification:
02.07.86

(51) Int. Cl.⁴: **C 05 G 3/00, C 05 D 9/02**

(21) Application number: 83900745.7

(22) Date of filling: 16.02.83

(86) International application number:
**PCT/SE 83/00051**

(87) International publication number:
**WO 83/02939 (01.09.83 Gazette 83/20)**

(54) COMPOSITION WITH GLASS-BORNE PLANT NUTRIENTS.

(30) Priority: 24.02.82 SE 8201146

(43) Date of publication of application:
07.03.84 Bulletin 84/10

(45) Publication of the grant of the patent:
02.07.86 Bulletin 86/27

(84) Designated Contracting States:
DE FR GB NL

(56) References cited:
EP-A-0 013 077
DE-A-2 938 779
DE-B-1 017 189
DE-B-1 232 993
DE-C-897 073
FR-A-2 205 491
GB-A-368 477
GB-A-8 401 881
US-A-3 762 909
US-A-3 930 833
US-A-3 958 973

(73) Proprietor: CHEMICAL DYNAMICS SWEDEN AB,
Box 212, S-532 00 Skara (SE)

(72) Inventor: WIBERGER, Ingvar, Höryda Gard, S-532
00 Skara (SE)
Inventor: SIMMINSKÖLD, Bo, Smedjegatan 3,
S-352 46 Växjö (SE)
Inventor: LAKATOS, Tibor, Hagadalsvägen 18,
S-352 46 Växjö (SE)

(74) Representative: Lautmann, Kurt O., KURT
LAUTMANNS PATENTBYRA AB Box 245, S-691 25
Karlskoga (SE)

## Description

The present invention relates to a product with specially combined glass particles containing micronutrients, and to a method of manufacturing these.

The need for trace elements in agriculture has increased in recent years, due to the increasing yield demands both in the production of animals and of crops. The need for trace elements for animals is relatively simple to fulfil by mixing various soluble salts into mineral fodder. However, the problems of supplying trace elements in crop cultivation are considerable and varied, primarily due to variations in the soil as a chemical environment. It is primarily alkaline and acidic soils which cause reactions of various kinds. In Scandinavia the most frequently occurring problem is in conjunction with stabilizing manganese. Manganese is also a problem internationally, and specific crops like fruit, berries and maize in alkaline soil also entail problems with zinc and iron. Chelates of various types are currently used to solve this plant nutrient problem. The chelates are generally used in the form of additives when watering, or as leaf sprays. Salts of various types are normally also added to fertilizers and leaf sprays. The drawbacks with chelates are that they are expensive and must be applied frequently, often asveral times a year.

To achieve long-term effect glass has been used containing micronutrients which are gradually leached out of the glass. The base for the glass carriers used in the micronutrient mixtures now commercially available is silicates. However, due to their high alkali content, these types of glass are less suitable as carriers for manganese, for instance, which is easily deposited in basic environments in the form of manganese hydroxide and is thus biologically difficult to utilize. Silicate glass also gives rise to silica oel which is difficult to dissolve and the solubility is therefore reduced with time. Glass based on phosphate has therefore been assumed to be a better carrier since, with this type of glass, the pH value can be regulated upon release to the acid side or the manganese ions can be kept in solution by suquestering even if the environment is alkaline. The release rate should also be more uniform due to the absence of colloidal layer on the surface of the fertilizer particles. Another advantage with phosphate glass would be that the carrier material itself, which consists primarily of phosphates, can also be used as Plant nutrient.

Proposals have already been put forward for the use of phosphate glass. Such glass is made of phosphorus pentoxide $P_2O_5$ and the solubility of the glass is generally regulated by the inclusion of calcium oxide CaO. These types of phosphate glass were developed to be used in combination with calcium cyanamide and give a fertilizer which acts slowly. Phosphate glass especially designed to fulfil the soil's iron requirement is also known. The main components in a typical composition for this purpose are $P_2O_5$ and FeO, with the addition of a few per cent $K_2O$.

Through the present invention new types of glass carriers have been developed adapted to micronutrients, primarily manganese, and surprisingly good results have been achieved. An essentiel part of our invention is that we have developed glass carriers with low Al content or no Al at all. Such glasses were known, see US-A 3 958 973, but incorporate alkali metal oxides or chlorides as solubility control agent.A drawback with other previously known Al-Containing glass carriers on a phosphate base has been the high Al content which may entail risks of Al poisoning in the root system. This is a threat to forestry and agriculture. According to our invention $TiO_2$ is used as solubility-regulating component.

In the following the manufacture of glass containing manganese will be described in more detail

## Manufacture of manganese glass

The aim was to manufacture a glassy product which, by slowly, continuously dissolving, gives off manganese over a relatively long period of time, perhaps about 10 years, and provides soil poor in manganese with a necessary addition of $Mn^{2+}$ ions. The glass should have a particle size suitable for existing spreaders (1-2 mm) and the quantity to be spread is also determined by the manner in which the machines operate, giving about 200 kg glass frits per hectars. If the manganese can be released uniformly over a 10-year period, ca. 10% Mn content in the glass will give the desired quantity of Mn. An important requirement is also that the manganese released remains in soluble form and accessible for absorption by the crops.

The carrier was phosphate-based glass which can be adjusted to slightly acid or almost neutral properties and by sequestering can keep the Mn ions in solution even in slightly alkaline environment, as well as having a more uniform release rate since no colloidal layer is formed on the surface of the particles. The dissolving rate of the glass is regulated by the addition of stabilizing oxides.

The glass should contain 55-65% $P_2O_5$ to make it easy to melt, stable against crystalization and to avoid unnecessary evaporation of $P_2O_5$ during melting. It was found that 10% Mn, corresponding to 12,9% MnO is the manganese concentration which provides the desired Mn addition. A considerable quantity of alkali in the form of $Na_2O$ or $K_2O$ is desirable to stabilize the glass and regulation of the dissolving rate can be achieved by the addition of CaO and/or $Al_2O_3$.. The invention however is only concerned with glasses containing titanium dioxide as a solubility-regulating agent. The choice between $K_2O$ and $Na_2O$ is dependent on economic factors since sodium compounds are expensive but potassium compounds contribute to the macronutrient supplement to the soil. Both alternatives were investigated, as well as combinations thereof. CaO was selected as dissolving rate stabilizer, primarily from the cost point of view, but since CaO alone did not give the desired dissolving rate, $Al_2O_3$ was also used.

The following raw products were used:

| Name | Formula | Oxides |
|---|---|---|
| Manganese carbonate | $MnCO_3$ | $MnO$ |
| Manganese acetate | $Mn(CH_3COO)_2 \cdot 4H_2O$ | $MnO$ |
| Pyrolusite | $MnO_2$ | $MnO$ |
| Potassium dihydrogen phosphate | $KH_2PO_4$ | $K_2O$, $P_2O_5$ |
| Sodium hexameta phosphate | $(NaPO_3)_6$ | $N_2O$, $P_2O_5$ |
| Aluminium phosphate | $AlPO_4$ | $Al_2O_3$, $P_2O_5$ |
| Tricalcium phosphate | $Ca_3PO_4$ | $CaO$, $P_2O_5$ |
| Ammonium dihydrogen phosphate | $NH_4H_2PO_4$ | $P_2O_5$ |
| Calcium carbonate | $CaCO_3$ | $CaO$ |
| Sodium carbonate | $Na_2CO_3$ | $Na_2O$ |

The procedure for melting the glass was as follows:

Batches for 100 or 200 g glass were melted in 250 ml quartz crucibles (ROTOSIL, Heraus) in an electric furnace. The melting temperature varied between 900°C and 1300°C, depending primarily on the $Al_2O_3$ content. 2-3 batches were inserted at intervals of 5-10 mins. 30 minutes after the last batch was inserted, the melt was stirred with an $Al_2O_3$ rod. After one hour the melt was poured out onto a steel plate.

The quantity of manganese dissolved was determined as follows:

Precisely 1 g crushed glass fraction 1-2 mm was weighed into a 500 ml polythene bottle and 250 ml 0.01 M phosphate buffer pH 6.6 was added. Stirring was accomplished by intermittent rotation of the bottle 5 min/h with the aid of a program.

10 ml of the leach solution was taken out, filtered, washed in distilled water and topped up to exactly 50 ml. The quantity of manganese in this solution was determined using a flame spectrophotometer.

Examples of glass compositions and leaching results are given in Table 1 below. The glass compositions have been calculated theoretically without taking into account $P_2O_5$ losses during the melting. The actual $P_2O_5$ may be considered somewhat lower. Some of the glass compositions contained 20 or 30% MnO, respectively, in order to investigate the possibility of using glas with higher Mn contents, as well as to assess the effect of the MnO content on the solubility of the glass. These compositions do not contain $TiO_2$ and therefore are not according to the invention.

Some general observations concerning the feasibility of manufacturing the glass compositions are as follows:

1. The $P_2O_5$ content should be at least 55%. Crystallization is likely to accur below this limit.

2. The $Al_2O_3$ content should be limited to 10%. Crystallization occurs at higher contents, or there is a risk of undissolved remnants.

3. CaO contents above 10% cause crystallization.

Samples were removed from the leaching experiments after 1, 4, 7 and 14 days. It was found that 1 day was too short a time for most of the glass compositions and the most soluble compositions gave cloudy solutions. After 14 days no analysis could be performed. The most complete series was Mn contents dissolved after 7 days and a statistical evaluation has therefore been carried out on the basis of these results to calculate the effect of the components on the solubility.

The effect of the $Al_2O_3$ content is shown in Diagram 1. This diagram shows that there is a Practical limit of about 5% $Al_2O_3$, which gives maximum stabilization effect and any increase gives no further improvement. (These compositions do not contain $TiO_2$ and therefore are not according to the invention.)

As a micronutrient, manganese should be in bivalent form. When producing the experimental glass compositions, therefore, manganese was added in bivalent form, either as carbonate or acetate. However, in normal production probably only pyrolusite ($MnO_2$) is feasible from an economic point of view.

It proved possible to reduce $MnO_2$ to bivalent manganese. Three different glass compositions were melted, having the same procentual composition: (The glass compositions did not contain $TiO_2$)

M 30 Mn added in the form of Mn acetate
M 31 Mn added in the form of $MnO_2$ (pyrolusite)
M 32 Mn added in the form of $MnO_2$ + 25% carbon (coke)

After melting polyvalent manganese was determined in the glass with the following results:

M 30 could not be determined
M 31 0.006%
M 32 0.03%

That M 32 had a somewhat higher content, despite the carbon additive, might be due to different melting times since this glass foamed more. The essential factor is that, irrespective of the valency stage of the raw material, Mn is reduced to bivalency in the phosphate-glass.

Some of the glass compositions were examined to determine the pH value of the solution. Variation was found to be between pH 6.4 and 7.3, i. e. neutral.

Orientated corrosion tests with chamotte material at 1000°C and a 5 day corrosion period showed extreme corrosion and the melting was therefore performed in higher smelt-cast refractory material such as Fondal (quartz block from Dider Werken) or ZAC ( --Electro Réfractaires).

TABLE 1

| Des. | P₂O₅ | MnO | K₂O | Na₂O | Al₂O₃ | CaO | Mn released as % of total Mn | |
|------|------|-----|-----|------|-------|-----|---------|---------|
| | | | | | | | 7 days | 14 days |
| M 20 | 55.0 | 13.0 | 20.2 | 0 | 4.0 | 7.8 | 2.2 | 3.3 |
| M 22 | 55.0 | 13.0 | 16.2 | 0 | 8.0 | 7.8 | 0.8 | 1.2 |
| M 25 | 55.0 | 13.0 | 0 | 16.2 | 8.0 | 7.8 | 0.6 | 0.9 |
| M 27 | 55.0 | 13.0 | 24.0 | 0 | 8.0 | 0 | 0.8 | 1.2 |
| M 33 | 60.0 | 12.9 | 11.1 | 0 | 8.0 | 8.0 | 0.7 | 1.0 |
| M 34 | 65.0 | 12.9 | 6.1 | 0 | 8.0 | 8.0 | 0.4 | 0.5 |
| M 36 | 65.0 | 12.9 | 4.1 | 0 | 10.0 | 8.0 | 0.4 | 0.6 |
| M 40 | 60.0 | 20.0 | 11.1 | 0 | 8.0 | 1.0 | 0.7 | 1.6 |
| M 43 | 60.0 | 20.0 | 9.0 | 0 | 10.0 | 1.0 | 0.5 | 1.0 |
| M 46 | 65.0 | 12.9 | 6.1 | 0 | 12.0 | 4.0 | 0.2 | 0.3 |
| M 48 | 65.0 | 30.0 | 5.0 | 0 | 0 | 0 | 7.4 | 11.8 |

The compositions were tested in a leaching column and compred with $MnSO_4$. This substance obviously had the greatest solubility The leaching here was ca. 3000 Mg over a 5-day period. The corresponding leaching rate from the most easily dissolved glasses, M 20 and M 48, was ca. 12 Mg per 7-day period.

For the glasses most difficult to dissolve, M 34 - M 46, the leaching varied between 5 and 1 Mg over a corresponding period. The glasses were also tested in a receptacle experient using soil poor in Mn. The soil was thoroughly fertilized and the various glass compositions were then mixed in. The receptacles were then sown with grain cultivated in soil poor in Mn. The experiments showed that the glasses had provided an adequate supply of Mn without the content of leached Mn being noticeable. Results of the cultivation experiment are given in Table 2.

**The production of phosphate glass having a low content of Al₂O₃**

Experiments have shown that titanium dioxide, $TiO_2$, can be used as solubility-regulating component instead of $Al_2O_3$. Various types of $TiO_2$ material can be used, such as pure $TiO_2$ (its conventional use being as colour pigment), rutile-mineral and ilmenite. The latter mineral consists substantially of $TiO_2$, FeO and $Fe_2O_3$.

The following are descriptions of the phosphate glass produced using ilmenite, by way of example. The ilmenite used was of Norwegian origin. A typical analysis for Norwegian ilmenite is the following:

$TiO_2$ 44.5%
FeO 34.0
$Fe_2O_3$ 12.5
MgO 5.0
$SiO_2$ 2.7
$Al_2O_3$ 0.6
99. 3 %
remainder: CaO, MnO, $Cr_2O_3$, $P_2O_5$

In the experiments described below ilmenite concentrate in finely milled form was used. The results can be seen in Table 3 showing a phosphate glass MTi in comparison with the glasses M48, M20 and M27 and a glass containing ZnO. The glasses were produced in the same manner.

As can be seen from the table, in MTi 8% $Al_2O_3$ in the comparison glass M27 has been replaced by 8% ilmenite. From the leaching experiments it is clear that ilmenite has a much greater effect on the water solubility than $Al_2O_3$. A desired solubility can be set by adjusting the quantity added.

There were no problems during melting.

This new type of phosphate glass containing $TiO_2$ has many advantages when it comes to producing compositions with glass-borne plant nutrients. Class can be produced which has a low $Al_2O_3$ content or no $Al_2O_3$ at all. The titanium dioxide has been found to be a micronutrient able to give increased harvests and is in any case not damaging. The use of ilmenite concentrate enables compositions to be manufactured at low cost. The iron in the ilmenite may also be useful.

4

Diagram 1

% dissolved Mn
7-day period

% Al₂O₃

**TABLE 2**

| | | Harvest, g | | Mn content, g/g | |
|---|---|---|---|---|---|
| EFFECT OF VARIOUS Mn-FERTILIZERS (PEAT SOIL) — Harvest of oats and rape and **Mn content therein** | | | | | |
| Treatment | Mn kg/ha | Oats* 1st harvest 8/7 | Rape 3rd harvest 8/9 | Oats 1st harvest 8/7 | Rape 3rd harvest 8/9 |
| Control | 0 | 3.6 | 27 | 200 | 85 |
| Glass  M48 | 69 | 3.6 | 28 | 591 | 289 |
| M48 | 7 | 4.2 | 28 | 264 | 128 |
| M20 | 30 | 4.6 | 28 | 327 | 152 |
| M20 | 3 | 5.1 | 29 | 211 | 101 |
| Mn-sulphate added to soil | 30 | 5.1 | 26 | 484 | 228 |
| | 3 | 4.3 | 24 | 230 | 88 |
| | 0.3 | 5.1 | 27 | 204 | 89 |

* Ca 15 plants.

**TABLE 3**

| Desig. | $P_2O_5$ | MnO | $K_2O$ | $Al_2O_3$ | CaO | ZnO | Ilme-nite | 4 days | 7 days | 14 days | Remarks |
|---|---|---|---|---|---|---|---|---|---|---|---|
| M 48 | 65.0 | 30.0 | 5.0 | 0 | 0 | 0 | 0 | 1.3 | 7.4 | 11.8 | |
| M 20 | 55.0 | 13.0 | 20.2 | 4.0 | 7.8 | 0 | 0 | 1.6 | 2.2 | 3.3 | |
| M 27 | 55.0 | 12.9 | 24.0 | 8.0 | 0 | 0 | 0 | 0.6 | 0.8 | 1.2 | Comparison glass without CaO containing $Al_2O_3$ |
| MZ 27 | 56.0 | 13.1 | 24.4 | 0 | 0 | 6.5 | 0 | 50.0 | 66.0 | 84.0 | ZnO glass in which $Al_2O_3$ has been replaced by ZnO per mol. |
| M Ti | 55.0 | 12.9 | 24.0 | 0 | 0 | 0 | 8 | 0.2 | 0.3 | 0.5 | As M27 but with the $Al_2O_3$ replaced by "ilmenite" |

Composition in % by weight. The leaching values indicate dissolved Mn as percentage of total quantity of Mn in the glass.

**Claims**

1. Composition with glass-borne plant nutrient, the glass being on a phosphate base with 55-65% $P_2O_5$, characterized in that the composition contains glass with an alumina content ($Al_2O_3$) varying between low and no alumina at all, that the composition contains manganese and that titanium dioxide ($TiO_2$) is used as additive to regulate the solubility, the content of titanium dioxide ($TiO_2$) being between 0,1 and 10,0%.

2. Composition according to claim 1, characterized in that $TiO_2$ is added in the form of ilmenite mineral.

3. Composition according to claim 1, characterized in that $TiO_2$ is added in the form of rutile mineral.

4. Composition according to claim 1, characterized in that technically pure $TiO_2$ is used.

5. Composition according to claim 1, characterized in that the manganese is bivalent.

6. Method of manufacturing a composition according to one or more of claims 1-5 by melting at temperatures between 900° and 1300°C, characterized in that the components are supplied to a furnace having walls of high quality smelt-cast refractory material of quartz block type.

7. Method according to claim 6, <u>characterized</u> in that manganese is supplied as manganese dioxide(MnO₂) in the form of pyrolusite and that during melting the manganese dioxide is converted to bivalent manganese in the phosphate glass formed.

## Patentansprüche

1. Komposition mit Pflanzennährstoffen auf Glasträger mit Phosphatebasis von 55-65% $P_2O_5$, <u>dadurch gekennzeichnet</u>, daß die Komposition Glas mit einem Gehalt von Aluminiumoxyd ($Al_2O_3$), zwischen niedrigerem Gehalt und keinem Gehalt variierend enthält, daß die Komposition Mangan enthält, daß Titandioxyd als löslichkeitsregulierender Zusatz verwendet wird und daß der Gehalt von Titandioxyd ($TiO_2$) zwischen 0,1 und 10,0% ist.

2. Komposition nach Anspruch 1, <u>dadurch gekennzeichnet</u>, daß $TiO_2$ als Ilmenitmineral zugesetzt wird.

3. Komposition nach Anspruch 1, <u>dadurch gekennzeichnet</u>, daß $TiO_2$ als Rutilemineral zugesetzt wird.

4. Komposition nach Anspruch 1, <u>dadurch gekennzeichnet</u>, daß technisch reines $TiO_2$ verwendet wird.

5. Komposition nach Anspruch 1, <u>dadurch gekennzeichnet</u>, daß das Mangan zweiwertig ist.

6. Verfahren durch Schmelzen bei Temperaturen zwischen 900° und 1300°C zum Herstellen einer Komposition nach einem oder mehreren Ansprüchen 1-5, dadurch <u>gekennzeichnet</u>, daß die Komponenten einem Ofen mit Wänden aus hochqualitativen schmelzgegiessenen feuerfesten Quarzblock-typus zugeführt werden.

7. Verfahren nach Anspruch 6, dadurch <u>gekennzeichnet</u>, daß daß Mangan als Mangandioxyd ($MnO_2$) in Form von Braunstein zugeführt wird und daß der Braunstein während des Schmelzens in zweiwertigem Mangan im gebildeten phosphatglas umgewandelt wird.

## Revendications

1. Composition contenant un engrais sur véhicule verre, le verre étant à base de phosphate à 55 - 65 % $P_2O_5$, <u>caractérisée</u> en ce que ladite composition contient du verre à teneur en alumine ($Al_2O_3$) variant entre un taux bas et pas d'alumine du tout, en ce que la composition contient du manganèse et en ce que le dioxyde de titane ($TiO_2$) est employé comme additif pour régulariser la solubilité, la teneur en dioxyde de titane ($TiO_2$) étant comprise entre 0,1 et 10,0 %.

2. Composition selon la revendication 1, <u>caractérisée</u> en ce que le dioxyde de titane ($TiO_2$) est ajouté sous forme d'ilménite.

3. Composition selon la revendication 1, <u>caractérisée</u> en ce que le dioxyde de titane ($TiO_2$) est ajouté sous forme de rutile.

4. Composition selon la revendication 1, <u>caractérisée</u> en ce que de dioxyde de titane $TiO_2$ techniquement pur est utilisé.

5. Composition selon la revendication 1, <u>caractérisée</u> en ce que le manganèse est bivalent.

6. Méthode de fabrication d'une composition conforme à l'une ou plusieurs des revendications 1 à 5, par fusion à des temperatures comprises entre 900° et 1300°C, <u>caractérisée</u> en ce que les composants sont placés dans un four à parois en matériau réfractaire de haute qualité moulé à l'état fondu, du type bloc de quartz.

7. Méthode selon la revendication 6, <u>caractérisée</u> en ce que le manganèse ajoute est du dioxyde de manganèse ($MnO_2$) sous forme de peroxyde de manganèse, et en ce que durant la fusion, le dioxyde de manganèse est converti en manganèse bivalent dans le verre au phosphate formé.